# EUROPÄISCHE PATENTSCHRIFT

(11) **EP 2 403 387 B1**
(45) Veröffentlichungstag und Bekanntmachung des Hinweises auf die Patenterteilung: **01.05.2013**
(21) Anmeldenummer: 10706241.6
(22) Anmeldetag: 03.03.2010
(51) Int. Cl.: A47J 31/44

(54) **VORRICHTUNG ZUM HERSTELLEN VON MILCHSCHAUM**
DEVICE FOR PRODUCING MILK FOAM
DISPOSITIF DE FABRICATION DE MOUSSE DE LAIT

(30) Priorität: 03.03.2009 EP 09154238
(43) Veröffentlichungstag der Anmeldung: 11.01.2012
(73) Patentinhaber: Delica AG, 4127 Birsfelden (CH)
(72) Erfinder: BRÖNNIMANN, Markus, 2560 Nidau (CH); LEHNER, Christoph, 4313 Möhlin (CH)
(74) Vertreter: Hepp Wenger Ryffel AG
(86) Internationale Anmeldenummer: PCT/EP2010/052649
(87) Internationale Veröffentlichungsnummer: WO 2010/100170

(56) Entgegenhaltungen:
- WO-A-2005/102126
- DE-A1- 4 445 436
- DE-U1- 29 605 821

## Beschreibung

Die Erfindung betrifft eine Vorrichtung zum Herstellen von Milchschaum gemäss dem Oberbegriff von Anspruch 1. Eine derartige Vorrichtung kann dazu verwendet werden, Milchschaum für Kaffeegetränke wie etwa Cappuccino oder Latte Macchiato herzustellen. Die Vorrichtung kann Teil einer Anordnung mit einer Kaffeemaschine sein. Selbstverständlich ist es aber auch denkbar, die Vorrichtung als Einzelmaschine auszugestalten.

Systeme zum Herstellen von Milchschaum sind seit längerer Zeit gebräuchlich. Eine gattungsmässig vergleichbare Vorrichtung ist aus der WO 2005/102126 A2 bekannt geworden. Darin ist eine Kaffeemaschine beschrieben, an die eine mobile Einheit mit einem Milchbehälter und einer Düse vom Venturi-Typ zum Aufschäumen von Milch andockbar ist. Die Düse weist eine Düseneintrittsöffnung für den Dampf, einen Lufteinlass, einen Milcheinlass sowie eine Düsenaustrittsöffnung auf. An die Düsenaustrittsöffnung ist ein Winkel-Rohrstück befestigt, das die Ausgabeöffnung vorgibt. Die für die Milchschaumerzeugung benötigte Luft liegt als Umgebungsluft vor und wird unter Ausnutzung des Saugeffekts in der Düse angesaugt. Nachteilig an dieser Vorrichtung ist beispielsweise, dass die Ansteuerung oder Regelung der Luftzufuhr relativ aufwendig ist. Dies hat zur Folge, dass der Milchschaum und damit die Qualität des Kaffee-Milchgetränks höheren Anforderungen oft nicht genügt. Beispielsweise hat sich in der Praxis gezeigt, dass der mit dieser Vorrichtung produzierte Milchschaum in Bezug auf die Temperatur relativ schwierig zu kontrollieren ist. Insgesamt weist die Vorrichtung einen relativ komplizierten Aufbau auf. Dies betrifft insbesondere die Milchschäumer-Düse, die vielteilig ausgestaltet ist. Damit wäre die Düse nicht als Wegwerfartikel geeignet.

Durch die EP 1 707 090 ist eine Vorrichtung zum Erzeugen von Milchschaum bekannt geworden, die mit einem Mischelement versehen ist. Das Mischelement weist zumindest einen mit einer Dampfzufuhrleitung verbindbaren Dampfeinlasskanal, einen mit einer Milchzufuhrleitung verbindbaren Milcheinlasskanal, einen mit einer Abgabeleitung verbindbaren Abgabekanal sowie einen Lufteinlasskanal auf. Eine Düse zur Erzielung einer Saugwirkung für die Milch ist jedoch nicht vorgesehen. Die Milch wird zwangsweise über eine Pumpe zugeführt.

Schliesslich ist durch die DE 44 45 436 eine Aufschäumvorrichtung zum Aufschäumen von Milch bekannt geworden. Diese weist neben einem Düsenteil eine Zuleitung für Dampf, eine Zuleitung für Luft und eine Zuleitung für Milch auf, wobei die Zuleitungen in einem Mischbereich zusammengeführt werden. Die Zuleitung für die Luft ist mit einer Druckluftquelle zum steuerbaren Einblasen von Luft verbunden. Der Ort des Lufteinblasens in die Dampfleitung kann dabei vor dem Düsenteil liegen. Diese Vorrichtung ist jedoch kompakt und nicht bedienerfreundlich. Abgesehen davon ist die Reinigung des Düsenteils problematisch.

Es ist daher eine Aufgabe der Erfindung, die Nachteile des Bekannten zu vermeiden und insbesondere eine Vorrichtung der eingangs genannten Art zu schaffen, mit der die Luftzufuhr für die Milchschaumerzeugung auf einfache Art und Weise variiert werden kann. Insbesondere soll die Vorrichtung eine vorteilhafte Ansteuerung oder Regelung der Luftzufuhr ermöglichen. Die Vorrichtung soll sich weiterhin durch einen einfachen Aufbau und verbesserte Hygiene auszeichnen, und sie soll benutzerfreundlich sein.

Diese Aufgaben werden erfindungsgemäss mit einer Vorrichtung gelöst, welche die Merkmale in Anspruch 1 aufweist. Die Vorrichtung zum Herstellen von Milchschaum sowie gegebenenfalls zum Erhitzen von Milch kann eine Dampfzufuhrleitung aufweisen, an die in Strömungsrichtung die mit einer Düseneintrittsöffnung versehene Düse anschliessen kann. Die Düse kann einen Düsenkanal aufweisen, dessen Kanalquerschnitt sich ausgehend von der Düseneintrittsöffnung in einen verengten Kanalabschnitt verjüngt. Der Kanalquerschnitt kann sich anschliessend in Richtung einer Düsenaustrittsöffnung aufweiten. Die Milch kann aus dem Milchbehälter unter Ausnutzung der durch die beschleunigte Strömung im verengten Kanalabschnitt erzeugten Saugwirkung in die Düse eingesaugt werden. Dadurch, dass der Lufteinlass sich nicht in der Düse befindet, sondern ausserhalb der Düse angeordnet ist, ergeben sich zahlreiche Vorteile. So kann beispielsweise die Düse selbst einfach ausgestaltet sein. Die örtliche Verschiebung des Lufteinlasses hat aber auch steuerungs- oder reglungstechnische Vorteile. Weiterhin kann sich die erfindungsgemässe Anordnung auch günstig auf die Hygiene auswirken, da nur wenige Teile oder Abschnitte der Vorrichtung mit Milch beaufschlagt werden.

Die Vorrichtung weist eine Luftpumpe auf, die zum Einbringen von Luft in die Dampfzufuhrleitung über ein Luftzuleitungsmittel mit der Lufteintrittsöffnung verbunden oder verbindbar ist. Das Luftzuleitungsmittel kann eine Luftzufuhrleitung sein. Eine solche Leitung kann als Schlauch ausgestaltet sein. Als Luftzuleitungsmittel sind aber zum Beispiel auch Ventile vorstellbar. Durch dieses Anschliessen einer Luftpumpe an die Dampfzufuhrleitung ist die Luftzufuhr besonders einfach einstellbar und steuerbar. Die Vorrichtung kann selbstverständlich auch derart betrieben werden, dass Milch (ohne Erzeugen von Milchschaum) erhitzbar ist. Bei der Luftpumpe kann es sich beispielsweise um eine Membran- oder Verdichterluftpumpe handeln.

Durch die Aufteilung der Vorrichtung in eine stationäre Gerätekomponente und in eine mobile Düsenkomponente wird auf vorteilhafte Weise erreicht, dass praktisch alle steuerbaren Elemente, die für die Schaumbildung erforderlich sind, in einem Gerätegehäuse untergebracht werden könne und dadurch die Handhabung des Milchbehälters und/oder der Düse nicht beeinträchtigen. Da beispielsweise im Gegensatz zur eingangs erwähnten WO 2005/102126 die Luftzufuhr nicht an der Düsenkomponente gesteuert werden muss, kann die Düse selbst äusserst einfach, bei Bedarf sogar als Wegwerfartikel ausgestaltet werden. Auch Fehlmanipulationen, die zu einer unzureichenden Schaumbildung führen können, sind zuverlässig ausgeschlossen.

Die Begriffe "stationär" und "mobil" bedeuten im Zusammenhang mit der beanspruchten Vorrichtung, dass die Düsenkomponente von der Gerätekomponente beispielsweise zu Reinigungszwecken gelöst und wieder eingesetzt werden kann, während die Gerätekomponente immer den gleichen Standort haben kann. Selbstverständlich ist aber auch die Gerätekomponente in dem Sinne mobil, dass ihr Standort jederzeit leicht gewechselt werden kann. Allerdings sind auch Einbauversionen, beispielsweise in Küchenkombinationen denkbar. Unter dem Begriff Milchzufuhrleitung ist vorliegend jede feste oder flexible Leitung unabhängig von ihrer Länge zu verstehen, die in die Düse mündet.

Besonders vorteilhaft kann es sein, wenn die Vorrichtung Steuermittel aufweist, über die die Luftpumpe zum Vorgeben des Mischungsverhältnisses des Dampf-Luft-Gemisches in der Dampfzufuhrleitung ansteuerbar ist. Die Steuermittel können Mikroprozessoren enthalten. Die Luftzufuhr kann so einfach variiert werden, wodurch unterschiedliche Milch- oder Kaffee-Milch-Getränke wie Cappuccino, Latte Macchiato einfach und mit hoher Qualität hergestellt werden können. Die Luftpumpe kann mittels der Steuermittel aber auch derart ansteuerbar sein, dass für den "heisse Milch"-Betrieb die Luftpumpe nicht aktiviert wird oder die Luftpumpe nur in einem Teillastbetrieb läuft. Mit dieser Anordnung kann die Temperatur des Dampf-Luft-Stroms auf einfache und vorteilhafte Art und Weise eingestellt werden. Weiter stellt die Luftzufuhr mittels der beschriebenen angesteuerten Luftpupe sicher, dass ein ausreichend heisser Milchschaum oder heisse Milch produziert werden kann.

Weiter kann die Vorrichtung einen Wasserbehälter, eine daran angeschlossene Wasserpumpe und einen damit verbundenen Dampferzeuger aufweisen, über den Dampf in die Dampfzufuhrleitung einspeisbar ist. Besonders vorteilhaft kann es sein, wenn die Vorrichtung Steuermittel zum Variieren der Pumpleistung der Wasserpumpe aufweist.

Die Düse kann einen Milchzufuhrkanal aufweisen, der vorzugsweise etwa im Bereich der engsten Stelle im verengten Kanalabschnitt in den Düsenkanal mündet. Durch diese Anordnung lässt sich unter Ausnutzung des Saug-Effekts Milch besonders effizient in die Düse ansaugen.

In einer weiteren Ausführungsform kann es vorteilhaft sein, wenn die Düse als vorzugsweise einstückiges, vorzugsweise in einem Spritzgussverfahren geschaffenes, Bauteil ausgebildet ist, das vorteilhaft aus Kunststoff besteht. Eine solche Düse lässt sich einfach und kostengünstig herstellen. Damit wäre die Düse als Wegwerfartikel geeignet. Dieses einstückige Bauteil kann die Düseneintrittsöffnung, die Düsenaustrittsöffnung und einen Milchzufuhrleitungsanschluss aufweisen. Der Milchzufuhrleitungsanschluss kann dabei als Milchansaugstutzen zum Anschliessen der Milchzufuhrleitung ausgestaltet sein, welcher einen mit dem Düsenkanal verbundenen Milchzufuhrkanal umgibt. Die Milchzufuhrleitung kann über eine Steck- oder Schnappverbindung am Milchansaugstutzen lösbar befestigt oder befestigbar sein.

Die Düsenaustrittsöffnung der Düse kann eine freiliegende Ausgabeöffnung zum Ausgeben des Milchschaums in eine Tasse aufweisen. Zusätzliche Bauteile zum Vorgeben einer Ausgabeöffnung sind damit nicht nötig.

Der Düsenkanal kann eine Umlenkung aufweisen, so dass die Strömungsrichtung im Bereich der Düseneintrittsöffnung und die Strömungsrichtung im Bereich der Düsenaustrittsöffnung in einem beliebigen Winkel, vorzugsweise aber etwa rechtwinklig zueinander verlaufen. Vorteilhaft kann es sodann sein, wenn der Milchzufuhrkanal im Bereich der Umlenkung oder nach der Umlenkung etwa rechtwinklig in den Düsenkanal mündet. Somit können die jeweils der Düseneintrittsöffnung und der Düsenaustrittsöffnung zugeordneten Kanalabschnitte und der Milchzufuhrkanal je im definierten Winkel, vorzugsweise im rechten Winkel ausgerichtet sein. Selbstverständlich wäre es aber auch vorstellbar, dass der Düsenkanal gerade verlaufen kann, so dass die Hauptströmungsrichtung zwischen der Düseneintrittsöffnung und im Bereich der Düsenaustrittsöffnung unverändert bleibt.

Die Handhabung lässt sich weiter vereinfachen, wenn die Düse über einen Bajonettverschluss an der Dampfzufuhrleitung angeschlossen oder anschliessbar ist. Selbstverständlich könnte die Düse aber auch auf andere Weise lösbar mit der Dampfzufuhrleitung verbunden werden. Denkbar wären beispielsweise Schnellschlusskupplungen oder eine Gewindekupplung mit Hilfe einer Überwurfmutter oder einfach gerade Steckkupplungen ohne Arretierung.

Die Düse kann schwenkbar an einem Deckelteil des Milchbehälters vorzugsweise lösbar befestigt oder befestigbar sein. In einer Ausgangsstellung kann die Düse platzsparend am Milchbehälter befestigt sein. Die Düse kann soweit in eine Ausgabestellung ausgeschwenkt werden, dass der Milchschaum direkt in eine Tasse ausgegeben werden kann.

Die Luftzufuhr in die Dampfzufuhrleitung erfolgt besonders vorteilhaft über eine Blende, vorzugsweise mit einem Durchmesser (Blendenöffnung) zwischen 0,2 mm und 2 mm. Diese Blende kann auch als Schlitzblende ausgebildet sein oder jede beliebige andere geometrische Form aufweisen.

Ein weiterer Aspekt der Erfindung betrifft eine Anordnung mit der vorgängig beschriebenen Vorrichtung und einer Kaffeemaschine zum Brühen von Kaffee. Derartige Kaffeemaschinen können zum Beispiel Kaffee-Vollautomaten sein, bei denen Kaffeebohnen nach Knopfdruck zuerst automatisch gemahlen und dann gebrüht werden. Selbstverständlich kann die Kaffeemaschine auch eine Maschine sein, die mit Kapseln, Pouches oder andere Portionenverpackungen arbeitet.

Die Gerätekomponente kann ein Gehäuse mit einer beispielsweise als Aufnahmebucht ausgebildeten Andockstelle zur Aufnahme des Milchbehälters aufweisen. Ausserdem kann die gesamte Gerätekomponente an eine Kaffeemaschine andockbar sein, wobei wenigstens die Versorgung mit Wasser und Elektrizität über die Kaffeemaschine erfolgt.

Der Dampferzeuger kann derart ansteuerbar sein, dass in Abhängigkeit vorausgegangener oder nachfolgender Prozessschritte darin verbleibendes Restwasser und/oder Dampf durch Aufheizen des Dampferzeugers ausstossbar ist. Damit ist gewährleistet, dass vor der eigentlichen Dampferzeugung das System in einen definierten Zustand mit leerem Dampferzeuger überführt wird. Der Ausstossvorgang erfolgt vorzugsweise vor jeder Schaumerzeugung, wenn der Dampferzeuger eine gewisse Temperatur unterschritten hat. Somit wird das Wasser, das durch einen Unterdruck in den Dampferzeuger geflossen ist, oder Wasser aus einem Spül- oder Entkalkungsvorgang sicher ausgestossen.

Während des Aufheizvorgangs wird eine definierte Menge Wasser in das System nachgepumpt, um ein erstes Dampfpolster vor dem eigentlichen Schaumbezug aufbauen zu können. Überschüssiger Dampf kann dabei über ein Überdruckventil abgelassen werden, das den sich aufbauenden Dampfüberdruck begrenzt. Alternativ wäre es möglich, überschüssigen Dampfdruck durch ein gesteuertes Dampfventil in der Dampfzufuhrleitung abzubauen. Dabei könnte es sich z.B. um ein Mehrwegeventil handeln.

Die Dampfzufuhrleitung und die Düse können zu Reinigungszwecken derart mit Wasser durchspülbar sein, dass keine Milch über die Milchzufuhrleitung angesaugt wird und kein Wasser in den Milchbehälter gelangen kann. Zu diesem Zweck muss die Wassermenge und Strömungsgeschwindigkeit der Wasserpumpe werkseitig entsprechend einjustiert werden. Ein derartiger Spülbetrieb hat den Vorteil, dass der Milchbehälter für den Spülvorgang nicht entfernt werden muss.

Besonders vorteilhaft kann die mobile Düsenkomponente an der Gerätekomponente drehbar oder schwenkbar gelagert sein, wobei ein Milchbehälter unabhängig von der Düsenkomponente an die Milchzufuhrleitung anschliessbar ist. Dies hat den Vorteil, dass die Düsenkomponente nicht zusammen mit dem Milchbehälter entfernt werden muss, sodass beispielsweise der Milchbehälter im Kühlschrank nicht unnötig Platz beansprucht.

Alternativ kann jedoch die Düse in einem Deckelteil des Milchbehälters vorzugsweise lösbar befestigt sein. Der Milchbehälter ist dann praktisch der mobilen Düsenkomponente zugeordnet. Dabei ist es besonders vorteilhaft, wenn die Düse derart drehbar im Deckelteil gelagert ist, dass die Düse in einer ersten Drehlage an die Gerätekomponente angeschlossen ist und in einer zweiten Drehlage von der Gerätekomponente getrennt ist. Dies lässt sich besonders vorteilhaft mithilfe eines Bajonettverschlusses erreichen.

Ausserdem kann es vorteilhaft sein, wenn der Anschluss der Düsenkomponente an die Gerätekomponente mithilfe eines Sensors feststellbar ist, wobei die Dampferzeugung in der Gerätekomponente nur bei angeschlossener Düsenkomponente aktivierbar ist. Auf diese Weise wird verhindert, dass bei nichteingesetzter Düsenkomponente Heissdampf unkontrolliert aus der Gerätekomponente austreten kann. Der Sensor ist vorteilhaft der Gerätekomponente zugeordnet und er steht in Wirkverbindung mit der Steuerung in der Gerätekomponente. Es kann sich dabei um einen mechanischen Sensor wie z.B. um einen Mikroschalter oder um einen elektrischen Sensor handeln.

Besonders gute Resultate können erzielt werden, wenn die Luft mit einem Druck zwischen 0.2 und 2 bar, vorzugsweise mit ca. 1 bar in die Dampfzufuhrleitung einspeisbar ist. In diesem Druckbereich können handelsübliche Luftpumpen eingesetzt werden, die nicht zu viel Raum beanspruchen.

Die Düse kann im Bereich ihrer engsten Stelle einen Durchmesser zwischen 0.5 und 2.5 mm, vorzugsweise ca. 1.5 mm aufweisen. Ausserdem ist es zweckmässig, wenn die Milchzufuhrleitung vor der Düse einen Querschnitt zwischen 0.5 und 2.5 mm², vorzugsweise ca. 1.25 mm² aufweist. Der Durchmesser beim Eintritt in den Düsenkanal, der sich an den Bereich der engsten Stelle anschliesst, kann zwischen 0.6 mm und 2.7 mm, vorzugsweise ca. 1.7 mm betragen. Diese Dimensionen könnten auch an Düsen von konventionellen Vorrichtungen zur Milchschaumbildung sehr vorteilhaft sein.

Es ist ausserdem zweckmässig, wenn die Düse einen Auslaufdurchmesser zwischen 2 und 15 mm, vorzugsweise ca. 6 mm bis 8 mm aufweist. Damit ist eine gute Schaumverteilung unabhängig von der Tassengrösse gewährleistet.

Weiter ist es zweckmässig, wenn zwischen dem Dampferzeuger und der Düse ein 3/2-Wege-Sperrventil angeordnet ist, das im geschlossenen Zustand die Dampfzufuhrleitung stromabwärts belüftet. Damit wird zuverlässig ein Ansaugen von Milch in den Dampferzeuger verhindert. Alternativ könnte zum Verhindern des Vakuums auch ein sogenannter Vakuumbrecher in der Form eines Rückschlagventils eingebaut werden. Auch durch die Aufrechterhaltung des Betriebs der Luftpumpe oder durch entsprechende Ausgestaltung der Lufteintrittsöffnung könnte ein Vakuum verhindert werden.

Der Dampferhitzer wird energetisch vorzugsweise derart ausgelegt, dass bei entsprechender Pumpenleistung für die Wasserpumpe und bei entsprechender Auslegung der Leitungsquerschnitte bei völlig kaltem System eine Schaumerzeugung innerhalb von 60 Sekunden, vorzugsweise innerhalb von wenigstens 30 Sekunden möglich ist.

Ausserdem kann es für bestimmte Gerätetypen vorteilhaft sein, wenn an der mobilen Düsenkomponente die Milchzufuhrleitung und die Düsenaustrittsöffnung der Düse bzw. ein sich daran anschliessendes Ausgaberohr derart angeordnet sind, dass aus einem Milchbehälter, insbesondere aus einer Tasse Milch ansaugbar und als heisse Milch oder Milchschaum wieder in den gleichen Milchbehälter abgebbar ist. Ersichtlicherweise erfordert dies eine geometrische Anordnung der entsprechenden Komponenten, so dass dieser Kreislaufbetrieb auch bei kleineren Gefässen möglich ist. Es wäre allerdings auch denkbar, Ansaugrohr und/oder Abgaberohr wenigstens teilweise flexibel auszugestalten. Die Verwendung der Vorrichtung im Kreislaufbetrieb hat den grossen Vorteil, dass nur gerade diejenige Menge Milch eingesetzt wird, die gerade benötigt wird, ohne dass eine im ungekühlten Zustand kritische Vorratshaltung für die Milch an der Vorrichtung erforderlich ist.

Weitere Einzelmerkmale und Vorteile der Erfindung ergeben sich aus der nachstehenden Beschreibung eines Ausführungsbeispiels und aus den Zeichnungen. Es zeigen:
- Figur 1: eine Anordnung mit einer Kaffeemaschine und einer Vorrichtung zum Herstellen von Milchschaum,
- Figur 2: eine stark vereinfachte schematische Darstellung einer erfindungsgemässen Vorrichtung zum Herstellen von Milchschaum,
- Figur 3: eine perspektivische Explosionsdarstellung der Vorrichtung zum Herstellen von Milchschaum für die Anordnung gemäss Figur 1,
- Figur 4: eine Seitenansicht der Vorrichtung gemäss Figur 3,
- Figur 5: eine weitere Seitenansicht mit einem Teilschnitt der Vorrichtung mit einer Düse in einer Ausgangsstellung,
- Figur 6: die Vorrichtung mit einer ausgeschwenkten Düse,
- Figur 7: eine Schnittdarstellung der Vorrichtung entlang der Schnittlinie A-A gemäss Figur 5,
- Figur 8: einen Längsschnitt durch ein Rohrstück der Dampfzufuhrleitung und eine daran angeschlossene Luftpumpe,
- Figur 9: eine perspektivische Vorderansicht des Rohrstücks mit der Luftpumpe gemäss Figur 8,
- Figur 10: eine schematische Darstellung einer weiteren Vorrichtung zum Herstellen von Milchschaum,
- Figur 11: eine perspektivische Darstellung einer weiteren Anordnung, die an eine Kaffeemaschine andockbar ist,
- Figur 12: die Anordnung gemäss Figur 11 aus einer anderen Perspektive,
- Figur 13: eine Seitenansicht der Anordnung gemäss Figur 11 mit entfernter Seitenwand,
- Figur 14: eine Detaildarstellung aus Figur 13 mit angekuppelter Düsenkomponente,
- Figur 15: die Düse aus Figur 14 in Alleinstellung,
- Figur 16: einen Querschnitt durch die Ebene I-I an der Düse gemäss Figur 15,
- Figur 17: das Detail A an der Düse gemäss Figur 15,
- Figur 18: das Detail B an der Düse gemäss Figur 16
- Figur 19: eine schematische Gesamtdarstellung einer Kaffeemaschine mit angedockter Gerätekomponente,
- Figur 20: eine perspektivische Darstellung eines Milchbehälters mit Deckelteil und eingelagerter Düse, und
- Figur 21: eine perspektivische Darstellung des Deckelteils auf dem Milchbehälter gemäss Figur 17.

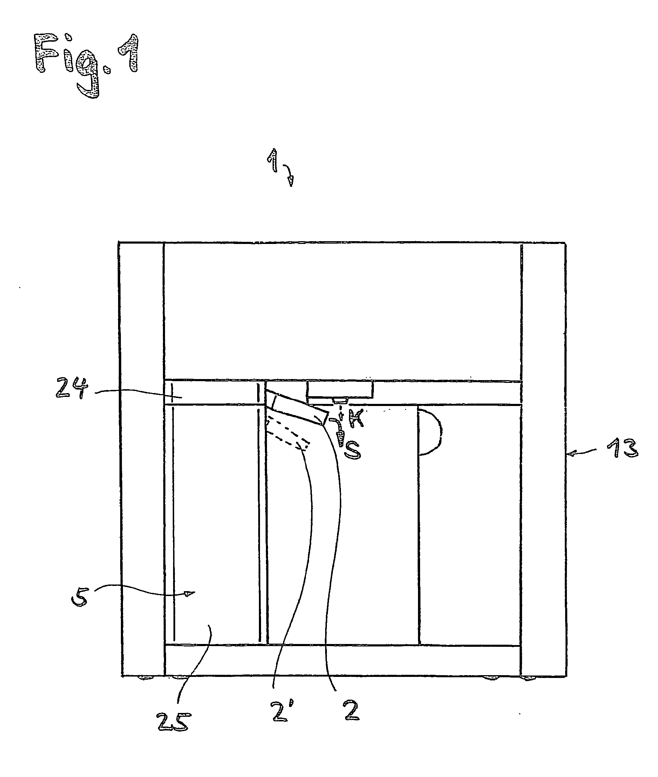

Figur 1 zeigt eine Gesamtansicht einer mit 1 bezeichneten Anordnung mit einer Kaffeemaschine 13 zum Brühen von Kaffee K und einer daran angedockten Vorrichtung 24 zum Herstellen von Milchschaum S. Bei der Kaffeemaschine kann es sich um einen konventionellen Kaffeevollautomaten mit Kaffeebohnen oder beispielhaft auch um eine so genannte Kapselmaschine handeln. Der Grundaufbau derartiger Kaffeemaschinen ist dem Fachmann bekannt und geläufig, weshalb auf einen näheren Beschrieb der Kaffeemaschine verzichtet werden kann. Die Kaffeemaschine 13 ist mit hier nicht gezeigten, jedoch nachfolgend im Detail beschriebenen Mitteln zum Erzeugen von Dampf und zum Zuführen von Luft zum Emulgieren von Milch, Dampf und Luft für die Milchschaumherstellung ausgestattet.

Wie Figur 1 zeigt, besteht die Vorrichtung 13 aus einem Milchbehälter 5, in dem eine Düse 2 integriert ist. Der Milchbehälter ist mit einem Deckelteil 24 verschlossen. Innenseitig am Deckelteil 24 ist schwenkbar die Düse 2 befestigt. Die Düse befindet sich in Figur 1 in einer ausgeschwenkten Stellung (Ausgabestellung), in der Milchschaum S in eine (nicht dargestellte) Tasse abgegeben werden kann. Mit 2' ist die Düse in einer anderen Ausgabestellung angedeutet.

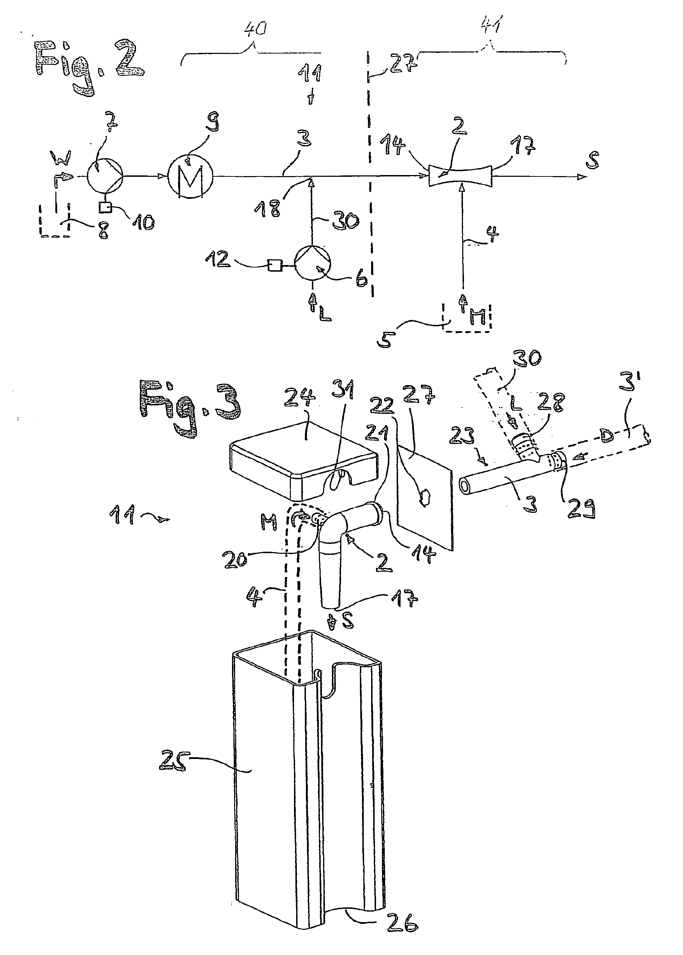

Aus der schematischen Darstellung gemäss Figur 2 sind der prinzipielle Aufbau und die Funktionsweise der Milchschäumer-Vorrichtung 11 gezeigt. In der Vorrichtung 11 wird Dampf, Luft und Milch in einer Düse 2 miteinander vermischt und emulgiert (Strömungsrichtungen sind mit Pfeilen angedeutet). Der so erzeugte, mit S angedeutete Milchschaum gelangt schliesslich in eine (nicht dargestellte) Tasse oder einen anderen Aufnahmebehälter. Zum Herstellen von Dampf wird Wasser W einem Wasserbehälter 8 mit Hilfe einer Wasserpumpe 7 entnommen. Das Wasser wird anschliessend durch einen Dampferhitzer 9 geführt. Der Dampf wird dann über eine Dampfzufuhrleitung 3 zu einer Düse 2 geführt. Die Düse 2 weist einen Düsenkanal mit einem konvergentdivergenten Kanalquerschnitt auf. Die Düseneintrittsöffnung ist mit 14, die Düsenaustrittsöffnung mit 17 bezeichnet. Unter Ausnutzung der durch die beschleunigte Strömung in einem verengten Kanalabschnitt der Düse 2 erzeugten Saugwirkung wird Milch M über eine Milchzufuhrleitung 4 aus einem Milchbehälter 5 in die Düse 2 angesaugt.

Zur Schaumerzeugung muss dem Dampf Luft zugemischt werden. Dazu wird Luft L, vorzugsweise in Form von Umgebungsluft mit Hilfe einer Luftpumpe 6 über eine Luftzufuhrleitung 30 unter Druck von 10 bis 100 kPa der Dampfströmung zugeführt. Die Lufteintrittsöffnung 18 befindet sich in Bezug auf die Strömungsrichtung vor der Düseneintrittsöffnung 14 vor der Düse. Mit einer gestrichelten Linie 27 ist eine Gehäusewand einer Kaffeemaschine angedeutet. Die Linie 27 kann - für bestimmte Ausführungsvarianten (siehe nachfolgende Figur 3-7) - als Trennlinie aufgefasst werden, die die Vorrichtung 11 in zwei Teile aufteilt. Der eine Teil, d.h. einerseits die Komponenten 7,8,9 für die Dampferzeugung und andererseits die Komponente 6 für die erzwungene Luftzuführung, sind der Kaffeemaschine zugeordnet. Der restliche Teil der Vorrichtung kann von der Kaffeemaschine abgekoppelt werden. Zum letztgenannten mobilen Teil gehören - wie Figur 2 zeigt - ersichtlicherweise die Düse 2 sowie der Milchbehälter 5.

Ersichtlicherweise bildet die Trennlinie 27 die Unterteilung der Vorrichtung in eine Gerätekomponente 40 und in eine Düsenkomponente 41, wobei wie nachstehend noch beschrieben leicht lösbare Kupplungsmittel vorgesehen sind.

In Abhängigkeit vom gewünschten Getränk (z.B. für Cappuccino oder Latte Macchiato) können unterschiedliche Luftvolumenströme in die Dampfleitung eingespeist werden. Die Steuerung des Luftvolumenstroms erfolgt mit Hilfe eines Steuermittels 12, mit dem die Pumpleistung verändert werden kann. Selbstverständlich kann die Vorrichtung 11 aber auch so betrieben werden, dass keine Luft eingespeist wird. Die Vorrichtung kann also auch zur Herstellung von heisser Milch verwendet werden. In der Luftzufuhrleitung 30 kann ein Regulierventil (nicht dargestellt) angeordnet sein. Anstatt eines Regulierventils wären alternativ auch Rückschlagventile oder betätigte Sperrventile denkbar. Die Dampfzufuhr wird vorzugsweise mit Hilfe eines Steuermittels 10 gesteuert, mit dem die Pumpleistung der Wasserpumpe 7 variiert werden kann. Die beiden Steuermittel 10 und 11 können selbstverständlich Bestandteil einer gemeinsamen EDV-Einrichtung sein.

Es ist grundsätzlich auch denkbar, dass die Milch nicht aus einem der Vorrichtung zugeordneten Milchbehälter, sondern direkt aus einer Tasse angesaugt wird und wiederum zurück in die Tasse ausgegeben wird. Bei einem derartigen Einsatz der Vorrichtung wäre die Laufzeit des Prozesses in Abhängigkeit vom Tassenvolumen zu begrenzen, um ein Überhitzen der Milch zu verhindern.

Konstruktive Details einer möglichen Ausgestaltung der Vorrichtung 11 sind aus Figur 3 entnehmbar. Die Düse 2 wird durch ein einstückiges Bauteil gebildet. Ein derartiges Bauteil aus Kunststoff lässt sich einfach in einem Spritzgussverfahren herstellen. Die Düse 2 weist neben der Düseneintrittsöffnung 14 und der Düsenaustrittsöffnung 17 einen Milchzufuhrleitungsanschluss in Form eines Milchansaugstutzens 20 auf. Die jeweils der Düseneintrittsöffnung 14, der Düsenaustrittsöffnung 11 zugeordneten Düsensegmente und der Milchansaugstutzen 20 sind je im rechten Winkel zueinander ausgerichtet. Die mit gestrichelten Linien angedeutete Milchzufuhrleitung 4 kann ein flexibler Schlauch sein, der auf den Milchansaugstutzen 20 aufgesteckt werden kann. Denkbar wäre auch ein in den Milchansaugstutzen einsteckbarer Trinkstrohhalm, der als Verbrauchsmaterial nicht gereinigt werden muss. Die Verwendung von auswechselbar aufsteckbaren Milchzufuhrleitungen als Wegwerfartikel wäre auch an konventionellen Milchschaumdüsen sehr vorteilhaft.

Die Düse 2 kann in den Milchbehälter eingesetzt werden. Hierzu sind am Deckelteil 24 des Milchbehälters Rastmittel 31 in Form federnder Rastarme vorgesehen, mit deren Hilfe die Düse rastend aufnehmbar ist. Der Deckelteil 24 kann aus Kunststoff bestehen und ein vorzugsweise einstückiges Spritzgussteil sein. Der Milchbehälter enthält weiterhin einen becher- oder wannenförmigen Grundkörper 25, auf den der Deckelteil 24 (zusammen mit der Düse 2) aufgesetzt werden kann. Milchbehälter und Düse bilden eine mobile Einheit, die von der restlichen Vorrichtung abgekoppelt und wieder angedockt werden kann. Ein mit Frischmilch befüllter Milchbehälter kann in einem Kühlschrank aufbewahrt werden. Für die mobile Milchbehälter-Düse-Einheit sind im Wesentlichen nur vier Bauteile (inklusive Milchzufuhrleitung 4) erforderlich, die alle aus Kunststoff bestehen können. Die Verwendung derart weniger einfacher Bauteile wirkt sich günstig auf Handhabung und Kosten aus.

Figur 3 zeigt weiterhin, dass der Lufteinlass sich ausserhalb der Düse 2 befindet. Der Lufteinlass ist durch einen Lufteinlassstutzen 28 vorgegeben, über den die mit gestrichelten Linien angedeutete Luftzufuhrleitung 30 an die Dampfzufuhrleitung 3 anschliessbar ist. Die Luft L wird somit über eine Lufteintrittsöffnung dem Dampfstrom D zugegeben. An die Leitung 30 ist die (hier nicht dargestellte) Luftpumpe angeschlossen. Der Dampf D wird wie vorgängig beschrieben mit Hilfe eines (hier ebenfalls nicht dargestellten) Dampferzeugers hergestellt. Im Bereich der maschinenseitigen Schnittstelle befindet sich innerhalb des Gehäuses 27 ein Rohrstück 23, das einen Teil der Dampfzufuhrleitung 3 bildet. Das Teil 23 ist als T-Rohrstück ausgestaltet und weist den erwähnten Lufteinlassstutzen 28 und einen Dampfeinlassstutzen 29 auf, über die jeweils die mit gestrichelten Linien angedeuteten Leitungen für die Luft L und den Dampf D anschliessbar sind. Die Luftzufuhrleitung 30 kann als Kunststoffschlauch ausgestaltet sein. Der mit 3' bezeichnete Schlauch kann ein temperaturbeständiger Schlauch beispielsweise ein Silikon armierter Schlauch oder auch aus Teflon® sein.

Zum Andocken der mobilen Einheit enthaltend Milchbehälter und Düse 2 muss die Düse 2 mit dem Ausgang der Dampfzufuhrleitung 3 verbunden werden. Die lösbare Verbindung kann - wie beispielhaft Figur 3 zeigt - durch einen Bajonettverschluss erfolgen. Hierzu sind düseneingangsseitig entsprechende Verbindungsmittel 21 angeordnet. An der Gehäusewand 27 ist eine zum Verbindungsmittel 21 komplementäre Aussparung 22 für den Bajonettverschluss vorgesehen. Denkbar sind aber auch andere lösbare Befestigungsmittel.

Wie Figur 3 sodann zeigt, ist der Milchbehälter etwa quaderförmig ausgestaltet wobei beliebige andere Formen denkbar sind. Sowohl Deckelteil 24 als auch der Grundkörper 25 verfügen über einen im Wesentlichen etwa rechtwinkligen Grundriss. An einer Seitenwand des Grundkörpers 25 befindet sich eine Einbuchtung 26 zur Aufnahme der Düse 2 in einer Ausgangsstellung. Am deckelseitigen Ende dieser Seitenwand ist eine etwa U-förmige Aussparung erkennbar, in welche der Milchansaugstutzen 20 einführbar ist.

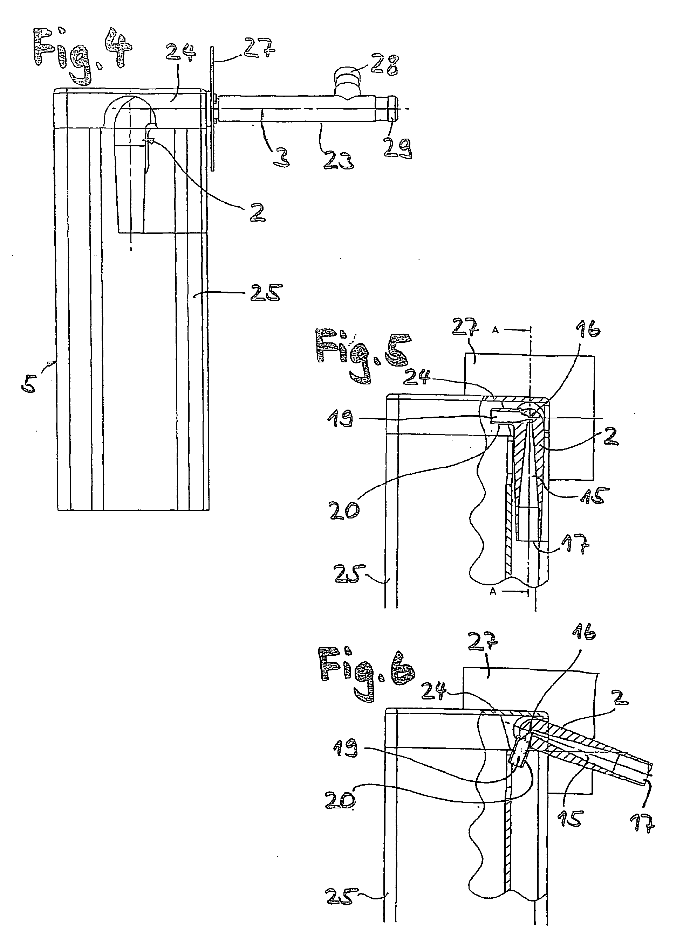

In Figur 4 ist die mobile Einheit mit dem Milchbehälter 5 und der Düse an die Kaffeemaschine angedockt. Wie aus Figur 4 hervorgeht, bildet der zusammengesetzte Milchbehälter 5 mit dem Grundkörper 25 und dem Deckelteil 24 eine kompakte Einheit.

Wie aus den Figuren 5 und 6 hervorgeht, kann die Düse zwischen einer Ausgangsstellung und einer Abgabestellung geschwenkt werden. In Figur 5 befindet sich die Düse 2 in einer Ausgangsstellung, in der sich das der Düsenaustrittsöffnung 17 zugeordnete Düsensegment mit dem entsprechenden Kanalabschnitt entlang der Behälterwand des Grundkörpers 25 des Milchbehälters erstreckt. In Figur 6 ist die Düse 2 ausgeschwenkt. In dieser Stellung kann Milchschaum (oder heisse Milch) direkt in eine (nicht dargestellte) Tasse abgegeben werden. Der Anwender hat die Möglichkeit, den Schwenkwinkel an die Tassengrösse anzupassen. Durch das Verschwenken wird aber auch gleichzeitig der vorgängig beschriebene Bajonettverschluss in eine Schliessstellung gebracht. Die Anordnung verfügt vorzugsweise über (nicht dargestellte) Schaltmittel, die mit den Steuermitteln für die Wasserpumpe und die Luftpumpe elektrisch oder elektronisch verbunden sind. Die Schaltmittel dienen zur Anwesenheitskontrolle und zeigen an, ob die mobile Einheit korrekt angekoppelt ist. Dadurch kann ein unbeabsichtigtes Entweichen von Dampf vermieden werden, wodurch ein sicherer Betrieb der Anordnung sichergestellt ist.

In Figuren 5 und 6 ist weiterhin erkennbar, dass der Milchansaugstutzen 20 einen Milchzufuhrkanal 19 umgibt, der mit dem Düsenkanal 15 im Bereich etwa der engsten Stelle verbunden ist.

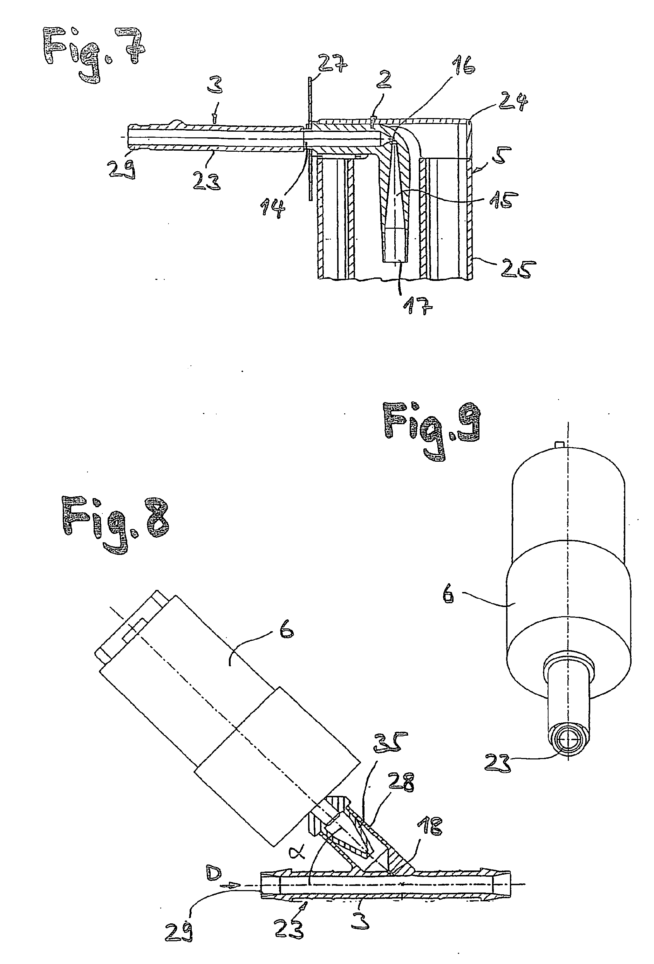

Aus der Schnittdarstellung gemäss Figur 7 ist insbesondere die Ausgestaltung des Düsenkanals 15 erkennbar. Der Düsenkanal 15 weist zunächst einen von der Düseneintrittsöffnung 14 ausgehenden, etwa zylindrischen Abschnitt auf, an den ein sich verjüngender, etwa konischer Abschnitt anschliesst. An den sich verjüngenden Abschnitt schliesst der mit 16 bezeichnete Kanalabschnitt an, der die engste Stelle des Düsenkanals vorgibt. Am Ende des Kanalabschnitts 16 mündet der Milchzufuhrkanal 19 zum Ansaugen der Milch ein. In diesem Einmündungsbereich des Kanalabschnitts 16 vermischen sich das Dampf-Luft-Gemisch und die Milch. Selbstverständlich wären andere Konfigurationen denkbar. So könnte zum Beispiel der Mischbereich auch als rechteckiger Raum ausgestaltet sein, dessen Breite grösser ist als der kleinste Durchmesser der hineinführenden Kanäle. Am so verengten Düsenkanal schliesst dann wieder ein sich aufweitender, etwa konischer Kanalabschnitt an. Im Bereich der Düsenaustrittsöffnung 17 weist der Düsenkanal schliesslich einen etwa zylindrischen Kanalabschnitt auf. Der Kanalabschnitt 16 hat beispielsweise einen Durchmesser zwischen 0.5 und 2.5 mm, vorzugsweise ca. 1.5 mm. Der Querschnitt des Milchzufuhrkanals 19 vor der Vereinigung mit dem Kanalabschnitt 16 beträgt zwischen 0.5 mm² und 2.5 mm², vorzugsweise ca. 1.25 mm². Der kleinste Durchmesser des Düsenkanals 15 im Anschluss an die engste Stelle beträgt zwischen 0.6 mm und 2.7 mm, vorzugsweise ca. 1.7 mm. Dieser Durchmesser ist ersichtlicherweise geringfügig grösser als der kleinste Durchmesser am Kanalabschnitt 16.

Die Figuren 8 und 9 zeigen einen gegenüber dem Ausführungsbeispiel gemäss Figur 3 modifizierten Luftanschluss für die Milchschäumer-Vorrichtung. Figur 8 zeigt einen Längsschnitt durch ein Rohrstück 23, das Teil der Dampfleitung 3 ist. Im Gegensatz zum Ausführungsbeispiel gemäss Figur 3 ist der Lufteinlassstutzen nicht rechtwinklig zur Dampfleitung ausgerichtet, sondern die Luft wird über einen schrägen Lufteinlassstutzen 28 dem Dampfstrom D zugegeben. In Figur 8 ist ein entsprechender Neigungswinkel mit α angedeutet, der hier beispielhaft etwa 45° beträgt. Selbstverständlich wären aber auch andere Neigungswinkel denkbar (z.B. 30° < α < 60°). Weiterhin ist ein Membranventil 35 erkennbar, das in den Lufteinlassstutzen 28 eingesteckt ist. An dieses Ventil 35 schliesst unmittelbar die Luftpumpe 6 an. Eine eigentliche Luftzufuhrleitung in Form eines separaten Schlauchstücks (vgl. Fig. 3) ist bei der Variante gemäss Figur 8 nicht vorgesehen. Sodann zeigt Figur 8, dass der die Lufteintrittsöffnung 18 vorgebende Luftzufuhrkanal im Mündungsbereich in den Dampfstrom im Vergleich zum Dampfkanalquerschnitt einen erheblich geringeren Kanalquerschnitt aufweist. Der Durchmesser des Luftzufuhrkanals im Mündungsbereich in den Dampfstrom kann zwischen 0.2 und 2mm (z. B. ca. 1mm) liegen und so als Blende dienen, während der Durchmesser des Dampfkanals des Rohrstücks 23 z.B. 4mm beträgt. Diese Blende kann aber auch vor dem Membranventil eingebaut sein. Dann wird der Mündungsbereich mit einem normalen Durchmesser von beispielsweise 3 mm ausgestattet.

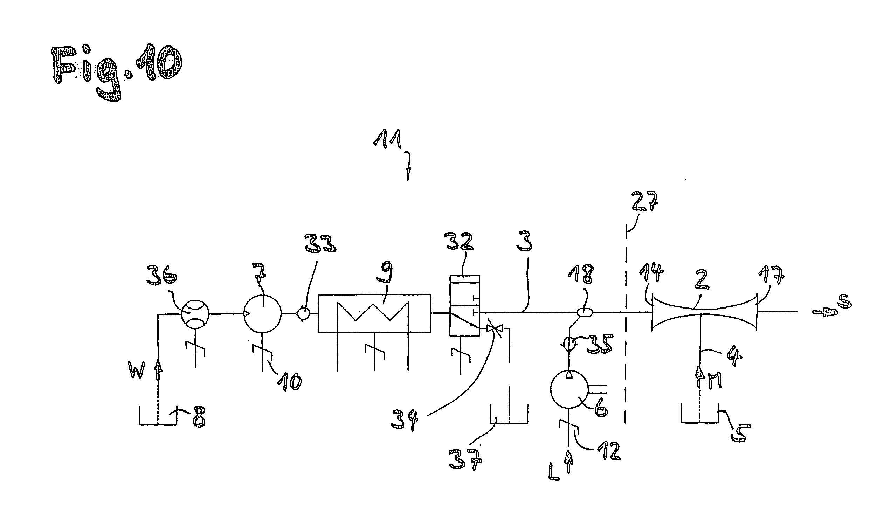

In Figur 10 ist ein gegenüber dem Ausführungsbeispiel gemäss Figur 2 detaillierteres Flussdiagramm für eine Milchschäumer-Vorrichtung 11 in einer leicht modifizierten Form dargestellt. Aus Figur 10 ist etwa erkennbar, dass die Vorrichtung 11 einen Durchflussmesser 36 aufweist, der steuer- und regeltechnisch mit der Wasserpumpe 7 in Wirkverbindung steht. Mit 33 ist ein Rückschlagventil bezeichnet. Das Bezugszeichen 32 steht für ein 3/2-Wege-Ventil. An einem Ausgang des Ventils ist ein Ventil 34 angeschlossen, über das im Fall eines Überdrucks Dampf - anstatt in die Dampfleitung 3 - abgelassen werden kann. Überschüssiges Restwasser kann von einem Behälter 37 aufgefangen werden. Zum Schutz der Luftpumpe ist als Rückschlagventil ein Membranventil 35 vorgesehen.

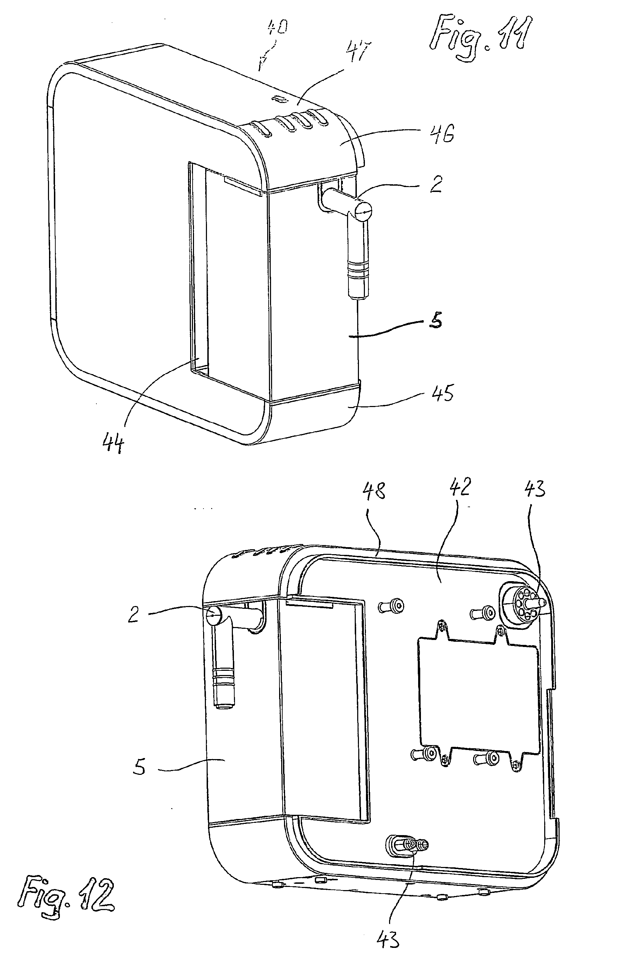

In den Figuren 11 bis 13 ist ein abgewandeltes Ausführungsbeispiel einer erfindungsgemässen Vorrichtung dargestellt, die ebenfalls an eine Kaffeemaschine angedockt werden kann. Mit Ausnahme des Wassertanks enthält die Vorrichtung unabhängig von der Kaffeemaschine sämtliche Komponenten, die zur Milchschaumerzeugung erforderlich sind. Die Gerätekomponente 40 ist dabei als quaderförmige Scheibe mit abgerundeten Ecken ausgebildet, wobei die äussere Form selbstverständlich der hier nicht dargestellten Kaffeemaschine angepasst ist. Der Milchbehälter 5 steht in einer Aufnahmebucht 44, gebildet durch ein Bodenteil 45 und ein Kopfteil 46, welche den Milchbehälter 5 zangenartig übergreifen. Bodenteil und Kopfteil sind jedoch Bestandteil eines Gehäuses 47. Die Düse 2 ragt aus einer U-förmigen Ausnehmung des Milchbehälters 5.

Aus Figur 12 ist ersichtlich, dass die eine Seitenwand des Gehäuses als Anschlusswand 42 ausgebildet ist, welche Anschlüsse 43 aufweist, die mit korrespondierenden Anschlüssen an der Kaffeemaschine kommunizieren. Ein umlaufender Rand 48 dient der exakten Positionierung an der Kaffeemaschine.

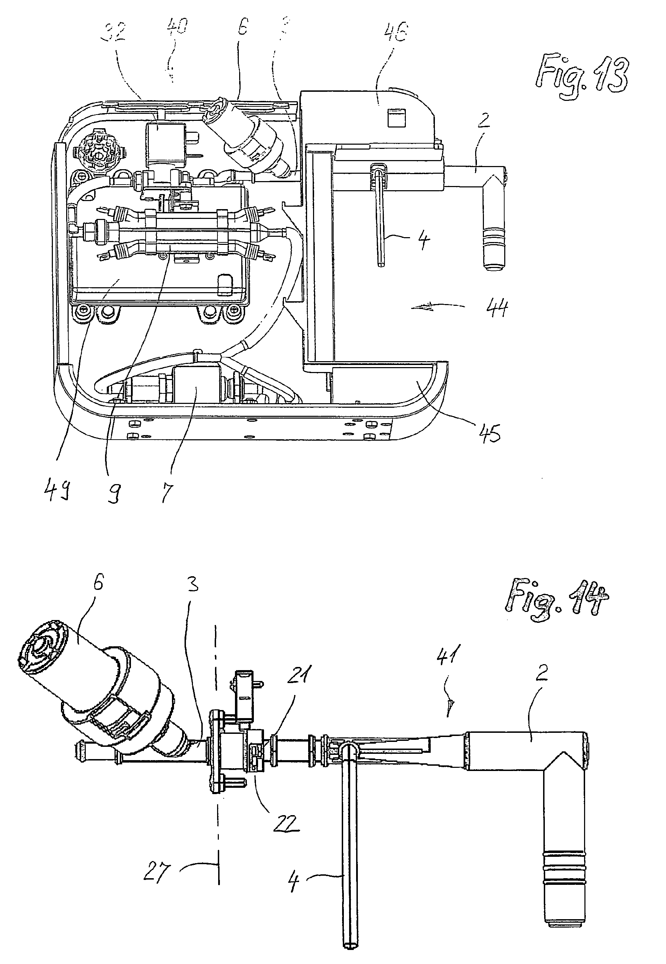

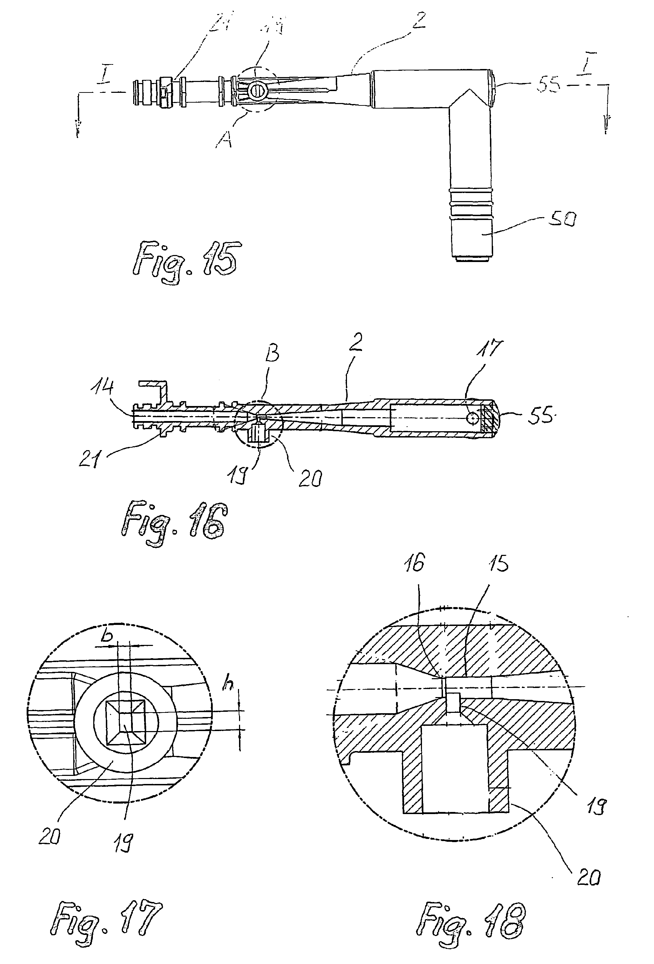

In der Darstellung gemäss Figur 13 sind sowohl die eine Seitenwand, als auch der Milchbehälter entfernt. Die Düse 2 mit der Milchzufuhrleitung 4 ist in Wirklichkeit nicht am Kopfteil 46 gelagert, sondern auf dem Deckelteil des Milchbehälters (siehe Figur 17). Es wäre aber auch denkbar, dass die Düse 2 bzw. die ganze Düsenkomponente auch am Kopfteil 46 lösbar gelagert ist, so dass das Gerät auch ohne Milchbehälter betrieben werden kann. So könnte man beispielsweise direkt eine handelsübliche Milchpackung in die Aufnahmebucht 44 einführen, wobei die Milchzufuhrleitung 4 durch eine kleine Öffnung in der Packung eingeführt werden könnte.

Im Gerät ist die bereist vorstehend beschriebene Luftpumpe 6 sichtbar, welche innerhalb des Gerätes Luft in die Dampfzufuhrleitung 3 einspeist. Die Wasserpumpe 7 ist am Boden des Gerätes angeordnet. Sie wird vom Wassertank der Kaffeemaschine mit Wasser versorgt. Von der Wasserpumpe gelangt das Wasser in den Dampferhitzer 9, der über das 3/2-Wegeventil 32 Dampf in die angeschlossene Düse 2 einspeist. Hinter dem Dampferhitzer 9 ist noch der Steuerungskasten 49 sichtbar, in welchem die elektrischen und elektronischen Komponenten zur Steuerung der Anlage untergebracht sind.

In Figur 14 ist als Detaildarstellung die Düsenkomponente 41 mit der Düse 2 und der Milchzufuhrleitung 4 dargestellt. Die Ankoppelung an die Dampfzufuhrleitung 3 erfolgt über einen Bajonettverschluss 21, 22. Mit der Linie 27 ist dabei wiederum die Gehäusewand angedeutet, aus welcher die Dampfzufuhrleitung 3 austritt.

In Figur 15 ist die abgekoppelte Düse 2 dargestellt, wobei auch der flexible Teil der Milchzufuhrleitung 4 (das Steigrohr) entfernt wurde. Im Gegensatz zum Ausführungsbeispiel gemäss Figur 3 verläuft der Düsenkanal hier zwischen der Düseneintrittsöffnung und der Düsenaustrittsöffnung geradlinig gestreckt und nicht in einem Winkel von 90° Grad. Trotzdem mündet die Milchzufuhrleitung bzw. der entsprechende Milch führende Kanal 19 an der engsten Stelle des Düsenkanals in die Düse. Die Umlenkung des fertigen Milchschaums erfolgt erst am Ende an einem Ausgaberohr 50. Aus fabrikationstechnischen Gründen ist die Öffnung im Bereich der Umlenkung mit einem eingepressten Deckel 55 verschlossen.

Aus dem Querschnitt gemäss Figur 16 ist die gesamte Kanalkonfiguration der Düse 2 im geradlinig gestreckten Bereich gut sichtbar, wobei hier auch noch auf die Details gemäss den Figuren 17 und 18 verwiesen wird. Von der Düseneintrittsöffnung 14 verengt sich der Kanalquerschnitt zunächst konisch bis zur engsten Stelle 16 auf einen Durchmesser von bspw. 1,5 mm. Daran schliesst sich unmittelbar ein hohlzylindrischer Düsenkanal 15 an, dessen Durchmesser geringfügig grösser ist, nämlich z.B. 1,7 mm. Erst nach einer bestimmten Strecke weitet sich dieser Düsenkanal 15 wieder auf bis zum Bereich der Umlenkung. Der Milchansaugstutzen 20 umgibt den Milchzufuhrkanal 19, der hier unmittelbar im Anschluss bzw. teilweise noch im Bereich der engsten Stelle 16 in den Düsenkanal 15 einmündet. Der Milchzufuhrkanal hat allerdings keinen kreisförmigen, sondern einen rechteckigen Querschnitt mit der Breite b und mit der Höhe h, wie insbesondere aus Figur 17 ersichtlich ist. Die Breite kann bspw. 1 mm und die Höhe 1,25 mm betragen, woraus ein Querschnitt von 1,25 mm2 resultiert.

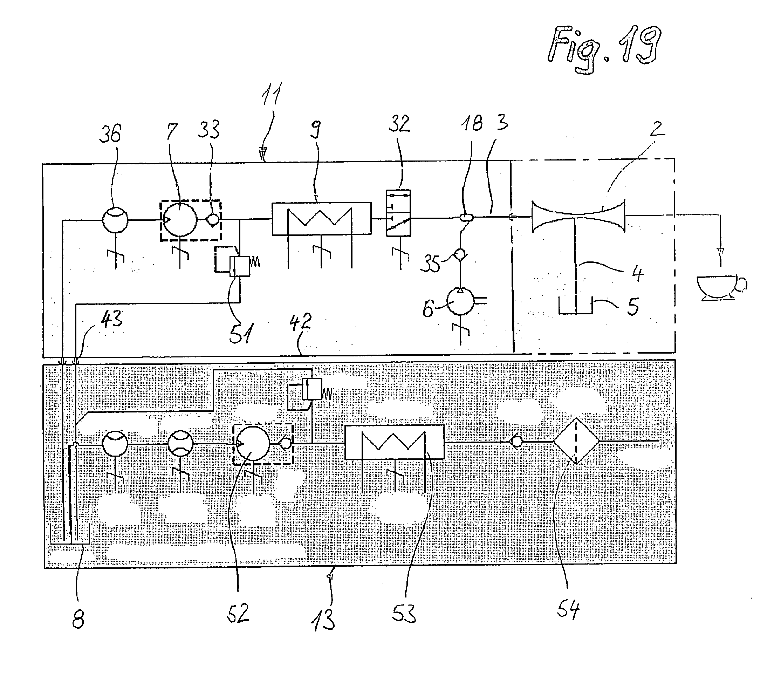

Figur 19 zeigt die schematische Gesamtdarstellung einer erfindungsgemässen Vorrichtung 11, die an eine Kaffeemaschine 13 angedockt ist. Die Komponenten der Vorrichtung 11 sind dabei annähernd identisch mit denjenigen gemäss Figur 10. Allerdings verfügt die Vorrichtung über keinen eigenen Wassertank 8. Dieser ist in der Kaffeemaschine 13 enthalten und der Anschluss der entsprechenden Leitungen erfolgt über die Anschlüsse 43. Dabei wird überschüssiges Wasser oder überschüssiger Dampf über ein Überdruckventil 51 in den Wasserbehälter 8 der Kaffeemaschine zurückgeführt. Auf die an sich bekannten Elemente der Kaffeemaschine wird hier nicht nähre eingegangen. Diese verfügt aber über eine eigene Wasserpumpe 52 und über einen Durchlauferhitzer 53 zum Erzeugen von Heisswasser. Der Kaffee wird in einer Brühkammer 54 gebrüht und von der Ausgabe des Milchschaums getrennt ausgegeben.

Prozesstechnisch sind mit der in Figur 16 schematisch dargestellten Anlage folgende Funktionen möglich:

Für einen Bezug von Milchschaum erfolgt zunächst ein Aufheizen des Dampferzeugers 9 auf Starttemperatur mit voller Heizleistung. Wenn das System kühl ist oder wenn vorher gespült oder entkalkt wurde, wird der Dampferzeuger 9 auf eine höhere definierte Starttemperatur aufgeheizt, bis über das Überdruckventil 51 das Restwasser ausgestossen wird. Danach oder gleichzeitig wird Wasser nachgepumpt, um ein definiertes Dampfpolster bereitzustellen. Bei diesem Vorbereitungsprozess kann das Ventil 34 kurzzeitig angelüftet werden, um den korrekten Druck im System sicherzustellen.

Wenn das System noch heiss ist, wird direkt beim Erreichen der gewünschten Temperatur das 3/2-Wegeventil 32 geöffnet, und die Wasserpumpe 7 beginnt, Wasser in den Dampferzeuger 9 einzuspeisen. Die Wassermenge kann dabei geregelt werden. Die Temperatur des Dampferzeugers wird während des ganzen Vorgangs konstant gehalten. Sobald die Düse 2 von Heissdampf durchströmt wird, beginnt die Saugwirkung und Milch wird über die Milchzufuhrleitung 4 angesaugt. Ist die Erzeugung von Milchschaum gewünscht, setzt gleichzeitig eine geregelte Luftzufuhr an der Lufteintrittsöffnung 18 mit Hilfe der Luftpumpe 6 ein. Am Ende des Vorgangs und nach dem Abschalten der Pumpe schliesst das 3/2-Wegeventil und die Milchzufuhr wird unterbrochen. Durch die Belüftung der Dampfzufuhrleitung 3 wird verhindert, dass Milchschaum oder Milch in den Dampferhitzer zurück gesaugt wird. Dies kann entweder dadurch erreicht werden, dass das Ventil 32 ein 3/2-WegeVentil ist, das in der neutralen Stellung die Dampfzufuhrleitung 3 belüftet. Ist das Ventil 32 ein 2/2-Wegeventil ist es aber auch denkbar, den Betrieb der Luftpumpe 6 aufrecht zu erhalten oder aber einen sogenannten Vakuumbrecher in die Dampfzufuhrleitung 3 einzubauen, und so das Zurücksaugen der Milch zu verhindern.

Das System kann auch mit kaltem Wasser durchspült und gereinigt werden, wobei dieser Vorgang in bestimmten Intervallen durch die Steuerung erzwungen werden kann. Beim Spülvorgang fliesst das Spülwasser aus der Düse 2, ohne dass Milch aus dem Behälter 5 angesaugt wird oder Spülwasser in den Milchbehälter zurück gelangt.

Ähnlich wie die Kaffeemaschine 13 muss auch die Vorrichtung 11 zur Milchschaumerzeugung in bestimmten Intervallen entkalkt werden. Der Entkalkungsbetrieb erfolgt dabei ähnlich wie der Spülbetrieb, wobei mit der Pumpe das Sicherheitsventil angelüftet wird, sodass Entkalkungsmittel auch durch das Sicherheitsventil und durch die Rückführleitung fliessen kann.

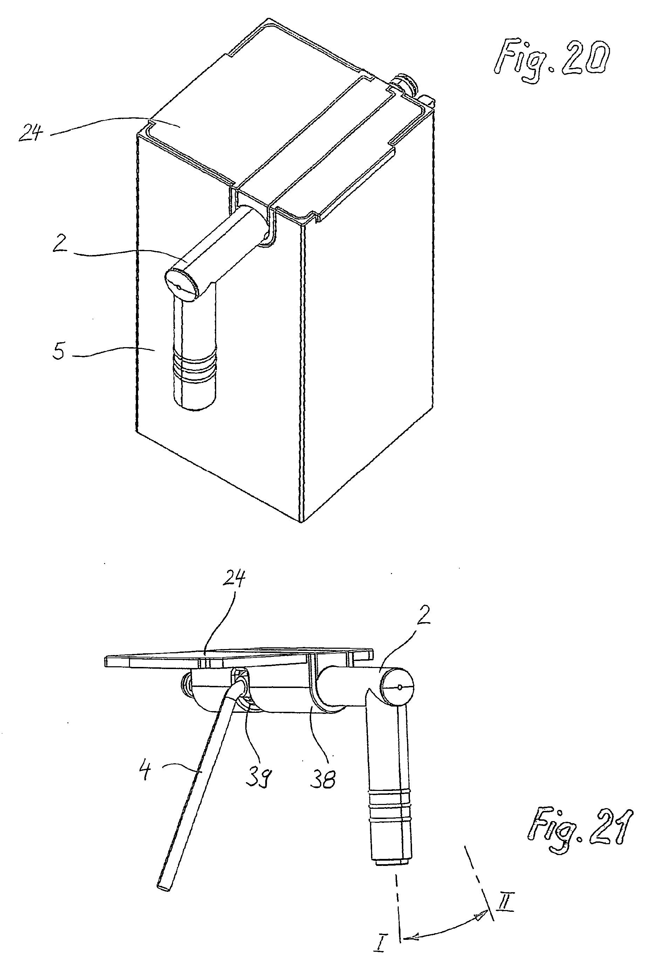

Die Figur 20 zeigt den Milchbehälter gemäss den Figuren 11 und 12 losgelöst von der Gerätekomponente 40. Der hier etwa quaderförmig ausgebildete Milchbehälter ist mit einem passgenauen Deckelteil 24 verschlossen, das beispielsweise auf den Milchbehälter aufschnappbar ist.

Aus Figur 21 ist ersichtlich, dass die Düse 2 in einem Lagerteil 38 unter dem Deckelteil 24 drehbar gelagert ist. Die Milchzufuhrleitung 4 ragt dabei aus einem Schlitz 39, so dass sie sich mit der Düse 2 ungehindert mitdrehen kann. Die Düse 2 kann zwischen einer Position I und II geschwenkt werden, wobei durch die Schwenkbewegung die druckdichte Ankoppelung der Düse 2 an die Dampfzufuhrleitung erfolgt. Es spielt dabei keine Rolle, in welcher Position die Verriegelung bzw. die Entriegelung erfolgt.

## Patentansprüche

1. Vorrichtung (11) zum Herstellen von Milchschaum
- mit einem Dampferzeuger (9), über den Dampf in eine Dampfzufuhrleitung (3) einspeisbar ist,
- mit einer zur Erzielung einer Saugwirkung sich verengenden Düse (2), mit einer Düseneintrittsöffnung (14),
- mit einer Milchzufuhrleitung (4), die derart mit der Düse verbunden ist, dass Milch aus einem Milchbehälter (5) unter Saugwirkung in die Düse (2) ansaugbar ist,
- sowie mit einer Luftpumpe (6), zum Zumischen von Luft in die Dampfzufuhrleitung an einer Lufteintrittsöffnung (18), welche sich in Bezug auf die Strömungsrichtung vor der Düseneintrittsöffnung (14) befindet,
**dadurch gekennzeichnet, dass** die Vorrichtung in zwei Teile aufgeteilt ist, nämlich in eine stationäre Gerätekomponente (40) mit einem Gerätegehäuse enthaltend den Dampferzeuger (9) und die Luftpumpe (6), und in eine mobile Düsenkomponente (41) enthaltend die Düse (2) und die Milchzufuhrleitung (4), wobei die Lufteintrittsöffnung (18) innerhalb der Gerätekomponente liegt und die Düsenkomponente lösbar mit der an einer Gehäusewand (27) aus der Gerätekomponente austretenden Dampfzufuhrleitung (14) verbunden ist.

2. Vorrichtung nach Anspruch 1, **dadurch gekennzeichnet, dass** die Düse (2) vorzugsweise als einstückiges, vorzugsweise in einem Spritzgussverfahren geschaffenes Bauteil enthaltend
- die Düseneintrittsöffnung (14),
- eine Düsenaustrittsöffnung (17) und
- einen Milchzufuhrleitungsanschluss, insbesondere in Form eines einen Milchzufuhrkanal (19) umgebenden Milchansaugstutzen (20) zum Anschluss der Milchzufuhrleitung (4) ausgebildet ist.

3. Vorrichtung nach Anspruch 1 oder 2, **dadurch gekennzeichnet, dass** die Düse (2) einen Milchzufuhrkanal (19) aufweist, der etwa im Bereich der engsten Stelle im verengten Kanalabschnitt (16) in einen Düsenkanal (15) der Düse mündet.

4. Vorrichtung nach einem der Ansprüche 1 bis 3, **dadurch gekennzeichnet, dass** die Düse einen Düsenkanal (15) mit einer Umlenkung aufweist, so dass die Strömungsrichtung im Bereich der Düseneintrittsöffnung (14) und die Strömungsrichtung im Bereich einer Düsenaustrittsöffnung (17) vorzugsweise etwa rechtwinklig zu einander verlaufen.

5. Vorrichtung nach einem der Ansprüche 1 bis 4, **dadurch gekennzeichnet, dass** die Düse (2) über einen Bajonettverschluss (21, 22) an die Dampfzufuhrleitung (3) anschliessbar ist.

6. Vorrichtung nach einem der Ansprüche 1 bis 5, **dadurch gekennzeichnet, dass** ein Milchbehälter der mobilen Düsenkomponente zugeordnet ist und dass die Düse (2) in einem Deckelteil (24) des Milchbehälters vorzugsweise lösbar befestigt ist.

7. Vorrichtung nach einem der Ansprüche 1 bis 6, **dadurch gekennzeichnet, dass** die Gerätekomponente Steuermittel (10) aufweist, über die die Luftpumpe (6) zum Vorgeben des Mischungsverhältnisses des Dampf-Luft-Gemisches in der Dampfzufuhrleitung (3) ansteuerbar ist.

8. Vorrichtung nach einem der Ansprüche 1 bis 7, **dadurch gekennzeichnet, dass** zwischen der Luftpumpe (6) und der Dampfzufuhrleitung (3) eine Blende angeordnet ist, vorzugsweise mit einem Durchmesser zwischen 0,2 mm und 2 mm.

9. Vorrichtung nach einem der Ansprüche 1 bis 8, **dadurch gekennzeichnet, dass** die Gerätekomponente einen Wasserbehälter (8), eine daran angeschlossene Wasserpumpe (7), mit welcher Wasser dem Dampferzeuger zuführbar ist, sowie Steuermittel (12) zum Variieren der Pumpenleistung der Wasserpumpe aufweist.

10. Vorrichtung nach einem der Ansprüche 1 bis 9, **dadurch gekennzeichnet, dass** die Gerätekomponente ein Gehäuse mit einer Andockstelle zur Aufnahme des Milchbehälters aufweist.

11. Vorrichtung nach einem der Ansprüche 1 bis 10, **dadurch gekennzeichnet, dass** der Dampferzeuger derart ansteuerbar ist, dass in Abhängigkeit vorausgegangener oder nachfolgender Prozessschritte darin verbleibendes Restwasser und/oder Dampf durch Aufheizen des Dampferzeugers ausstossbar ist.

12. Vorrichtung nach einem der Ansprüche 1 bis 11, **dadurch gekennzeichnet, dass** die Dampfzufuhrleitung (3) und die Düse (2) derart mit Wasser durchspülbar ist, dass keine Milch über die Milchzufuhrleitung (4) angesaugt wird und kein Wasser in den Milchtank fliesst.

13. Vorrichtung nach einem der Ansprüche 1 bis 5, **dadurch gekennzeichnet, dass** die mobile Düsenkomponente an der Gerätekomonente drehbar oder schwenkbar gelagert ist und dass ein Milchbehälter unabhängig von der Gerätekomponente und/oder von der Düsenkomponente an die Milchzufuhrleitung anschliessbar ist.

14. Vorrichtung nach Anspruch 5 und Anspruch 6, **dadurch gekennzeichnet, dass** die Düse (2) derart drehbar im Deckelteil (24) gelagert ist, dass der Bajonettverschluss (21, 22) in einer ersten Drehlage geschlossen und in einer zweiten Drehlage geöffnet ist.

15. Vorrichtung nach einem der Ansprüche 1 bis 14, **dadurch gekennzeichnet, dass** der Anschluss der Düsenkomponente (41) an die Gerätekomponente (40) mithilfe eines Sensors feststellbar ist, wobei die Dampferzeugung in der Gerätekomponente nur bei angeschlossener Düsenkomponente aktivierbar ist.

16. Vorrichtung nach einem der Ansprüche 1 bis 15, **dadurch gekennzeichnet, dass** die Luft mit einem Druck zwischen 0.2 und 2 bar, vorzugsweise mit ca. 1 bar in die Dampfzufuhrleitung einspeisbar ist.

17. Vorrichtung nach einem der Ansprüche 1 bis 16, **dadurch gekennzeichnet, dass** die Düse im Bereich ihrer engsten Stelle (16) einen Durchmesser zwischen 0.5 mm und 2.5 mm, vorzugsweise ca. 1.5 mm und im unmittelbar daran anschliessenden Bereich des Düsenkanals (15) einen Durchmesser zwischen 0,6 mm und 2,7 mm, vorzugsweise ca. 1,7 mm aufweist.

18. Vorrichtung nach einem der Ansprüche 1 bis 17, **dadurch gekennzeichnet, dass** die Milchzufuhrleitung (19) vor der Düse (12) einen Kanalquerschnitt zwischen 0.5 mm² und 2.5 mm², vorzugsweise ca. 1.25 mm² aufweist.

19. Vorrichtung nach einem der Ansprüche 1 bis 13, **dadurch gekennzeichnet, dass** die Düse (2) einen Auslaufdurchmesser zwischen 2 und 15 mm, vorzugsweise ca. 6 mm bis 8 mm aufweist.

20. Vorrichtung nach einem der Ansprüche 1 bis 19, **dadurch gekennzeichnet, dass** zwischen dem Dampferzeuger (9) und der Düse (2) ein 3/2-Wege-Sperrventil (32) angeordnet ist, das im geschlossenen Zustand die Dampfzufuhrleitung (3) stromabwärts belüftet.

21. Vorrichtung nach einem der Ansprüche 1 bis 20, **dadurch gekennzeichnet, dass** an der mobilen Düsenkomponente (41) die Milchzufuhrleitung (4) und die Düsenaustrittsöffnung (17) der Düse (2) bzw. ein sich daran anschliessendes Ausgaberohr (50) derart angeordnet sind, dass aus einem Milchbehälter, insbesondere aus einer Tasse Milch ansaugbar und als heisse Milch oder Milchschaum wieder in den gleichen Milchbehälter abgebbar ist.

22. Vorrichtung nach einem der Ansprüche 1 bis 21, **dadurch gekennzeichnet, dass** der Dampferzeuger (9) derart ansteuerbar ist, dass während eines Aufheizvorgangs eine definierte Menge Wasser in den Dampferzeuger einspeisbar ist, bis sich vor dem Milchschaumbezug ein durch ein Überdruckventil begrenzbarer oder durch ein gesteuertes Dampfventil abbaubarer Dampfüberdruck im System aufbaut.

23. Vorrichtung nach Anspruch 9, und einem der Ansprüche 10 bis 22, **dadurch gekennzeichnet, dass** die Wasserpumpe (7) mit einem Arbeitsdruck betreibbar ist, bei dem ein nachgeschaltetes Überdruckventil (51) anlüftbar ist, um in einem Entkalkungsbetrieb die Reinigung und Entkalkung des Überdruckventils zu ermöglichen.

24. Vorrichtung nach einem der Ansprüche 1 bis 19, **dadurch gekennzeichnet, dass** zwischen dem Dampferzeuger (9) und der Düse (2) ein 2/2-Wege-Sperrventil (32) angeordnet ist, und dass zur Verhinderung eines Vakuums in der Dampfzufuhrleitung (3) stromabwärts bei geschlossenem 2/2-Wege-Sperrventil mit der Luftpumpe (6) Luft in die Dampfzufuhrleitung einspeisbar ist.

25. Verwendung einer Vorrichtung nach einem der Ansprüche 1 bis 21, zum Ansaugen von Milch aus einem nicht der Vorrichtung zugeordneten Milchbehälter, insbesondere aus einer Tasse und zum Abgeben von heisser Milch oder Milchschaum in den gleichen Milchbehälter.

26. Vorrichtung nach einem der Ansprüche 1 bis 10, **dadurch gekennzeichnet, dass** die Gerätekomponente an eine Kaffeemaschine andockbar ist, wobei wenigstens die Versorgung mit Wasser und Elektrizität über die Kaffeemaschine erfolgt.

## Claims

1. Device (11) for producing milk froth
- having a steam generator (9) by means of which steam can be fed to a steam supply line (3),
- having a nozzle (2) which is constricted so as to achieve a suction action and has a nozzle inlet opening (14),
- having a milk supply line (4) which is connected to the nozzle in such a way that milk can be drawn into the nozzle (2) from a milk container (5) under suction action,
- and also having an air pump (6) for admixing air to the steam supply line at an air inlet opening (18) which is located upstream of the nozzle inlet opening (14) in relation to the direction of flow,
**characterized in that** the device is divided into two parts, specifically into a stationary appliance component (40) having an appliance housing containing the steam generator (9) and the air pump (6), and into a mobile nozzle component (41) containing the nozzle (2) and the milk supply line (4), with the air inlet opening (18) being situated within the appliance component, and the nozzle component being detachably connected to the steam supply line (14) which leaves the appliance component at a housing wall (27).

2. Device according to Claim 1, **characterized in that** the nozzle (2) is preferably in the form of an integral component which is preferably produced using an injection-molding process, containing
- the nozzle inlet opening (14),
- a nozzle outlet opening (17), and
- a milk supply line connection, in particular in the form of a milk intake fitting (20), which surrounds a milk supply duct (19), for connection of the milk supply line (4).

3. Device according to Claim 1 or 2, **characterized in that** the nozzle (2) has a milk supply duct (19) which opens into a nozzle duct (15) of the nozzle approximately in the region of the narrowest point in the constricted duct section (16).

4. Device according to one of Claims 1 to 3, **characterized in that** the nozzle has a nozzle duct (15) with a deflection, so that the direction of flow in the region of the nozzle inlet opening (14) and the direction of flow in the region of a nozzle outlet opening (17) preferably run approximately at a right angle to one another.

5. Device according to one of Claims 1 to 4, **characterized in that** the nozzle (2) can be connected to the steam supply line (3) by means of a bayonet fitting (21, 22).

6. Device according to one of Claims 1 to 5, **characterized in that** a milk container is associated with the mobile nozzle component, and **in that** the nozzle (2) is preferably detachably fixed in a cover part (24) of the milk container.

7. Device according to one of Claims 1 to 6, **characterized in that** the appliance component has control means (10) by means of which the air pump (6) for prespecifying the mixing ratio of the steam/air mixture in the steam supply line (3) can be actuated.

8. Device according to one of Claims 1 to 7, **characterized in that** a diaphragm is arranged between the air pump (6) and the steam supply line (3), said diaphragm preferably having a diameter of between 0.2 mm and 2 mm.

9. Device according to one of Claims 1 to 8, **characterized in that** the appliance component has a water container (8), a water pump (7) which is connected to said water container and with which water can be supplied to the steam generator, and also control means (12) for varying the pump output of the water pump.

10. Device according to one of Claims 1 to 9, **characterized in that** the appliance component has a housing having a docking point for accommodating the milk container.

11. Device according to one of Claims 1 to 10, **characterized in that** the steam generator can be actuated in such a way that residual water and/or steam, which remains in said steam generator depending on preceding or subsequent process steps, can be expelled by heating the steam generator.

12. Device according to one of Claims 1 to 11, **characterized in that** the steam supply line (3) and the nozzle (2) can be flushed with water in such a way that no milk is drawn by suction via the milk supply line (4) and no water flows into the milk tank.

13. Device according to one of Claims 1 to 5, **characterized in that** the mobile nozzle component is rotatably or pivotably mounted on the appliance component, and **in that** a milk container can be connected to the milk supply line independently of the appliance component and/or of the nozzle component.

14. Device according to Claim 5 and Claim 6, **characterized in that** the nozzle (2) is rotatably mounted in the cover part (24) in such a way that the bayonet fitting (21, 22) is closed in a first rotation position and is open in a second rotation position.

15. Device according to one of Claims 1 to 14, **characterized in that** the connection of the nozzle component (41) to the appliance component (40) can be established with the aid of a sensor, it being possible to activate steam generation in the appliance component only when the nozzle component is connected.

16. Device according to one of Claims 1 to 15, **characterized in that** the air can be fed to the steam supply line at a pressure of between 0.2 and 2 bar, preferably at approximately 1 bar.

17. Device according to one of Claims 1 to 16, **characterized in that** the nozzle has a diameter of between 0.5 mm and 2.5 mm, preferably of approximately 1.5 mm, in the region of its narrowest point (16) and a diameter of between 0.6 mm and 2.7 mm, preferably of approximately 1.7 mm, in the region of the nozzle duct (15) immediately adjoining said region of the narrowest point of the nozzle.

18. Device according to one of Claims 1 to 17, **characterized in that** the milk supply line (19) has a duct cross section of between 0.5 mm² and 2.5 mm², preferably of approximately 1.25 mm², upstream of the nozzle (12).

19. Device according to one of Claims 1 to 13, **characterized in that** the nozzle (2) has an outflow diameter of between 2 and 15 mm, preferably of approximately 6 mm to 8 mm.

20. Device according to one of Claims 1 to 19, **characterized in that** a 3/2-way shut-off valve (32) is arranged between the steam generator (9) and the nozzle (2), said 3/2-way shut-off valve ventilating the steam supply line (3) in the downstream direction in the closed state.

21. Device according to one of Claims 1 to 20, **characterized in that** the milk supply line (4) and the nozzle outlet opening (17) of the nozzle (2), or a discharge pipe (50) which is connected to said nozzle outlet opening, are arranged on the mobile nozzle component (41) in such a way that milk can be drawn by suction from a milk container, in particular from a cup, and can be dispensed back into the same milk container again as hot milk or milk froth.

22. Device according to one of Claims 1 to 21, **characterized in that** the steam generator (9) can be actuated in such a way that, during a heating process, a defined quantity of water can be fed to the steam generator until a steam overpressure which can be limited by an overpressure valve or can be reduced by a controlled steam valve builds up in the system before milk froth is delivered.

23. Device according to Claim 9 and one of Claims 10 to 22, **characterized in that** the water pump (7) can be operated by a working pressure at which a downstream overpressure valve (51) can be slightly opened in order to allow the overpressure valve to be cleaned and descaled in a descaling operation.

24. Device according to one of Claims 1 to 19, **characterized in that** a 2/2-way shut-off valve (32) is arranged between the steam generator (9) and the nozzle (2), and **in that** air can be fed to the steam supply line with the air pump (6) in order to prevent a vacuum in the steam supply line (3) in the downstream direction when the 2/2-way shut-off valve is closed.

25. Use of a device according to one of Claims 1 to 21 for drawing milk by suction from a milk container which is not associated with the device, in particular from a cup, and for dispensing hot milk or milk froth into the same milk container.

26. Device according to one of Claims 1 to 10, **characterized in that** the appliance component can be docked to a coffee machine, with at least water and electricity being supplied by means of the coffee machine.

## Revendications

1. Dispositif (11) de fabrication de mousse de lait
- comprenant un générateur de vapeur (9), par le biais duquel de la vapeur peut être injectée dans une conduite d'alimentation en vapeur (3),
- comprenant une buse (2) se rétrécissant pour obtenir un effet d'aspiration, avec une ouverture d'entrée de buse (14),
- comprenant une conduite d'alimentation en lait (4) qui est connectée à la buse de telle sorte que du lait puisse être aspiré hors d'un récipient de lait (5) par effet d'aspiration dans la buse (2),
- et comprenant une pompe à air (6) pour le mélange d'air dans la conduite d'alimentation en vapeur au niveau d'une ouverture d'entrée d'air (18) qui se trouve avant l'ouverture d'entrée de buse (14) par rapport à la direction d'écoulement,
**caractérisé en ce que** le dispositif est divisé en deux parties, à savoir en une composante d'appareil stationnaire (40) avec un boîtier d'appareil contenant le générateur de vapeur (9) et la pompe à air (6), et en une composante de buse mobile (41) contenant la buse (2) et la conduite d'alimentation en lait (4), l'ouverture d'entrée d'air (18) se situant à l'intérieur de la composante d'appareil et la composante de buse étant connectée de manière détachable à la conduite d'alimentation en vapeur (14) sortant de la composante d'appareil au niveau d'une paroi de boîtier (27).

2. Dispositif selon la revendication 1, **caractérisé en ce que** la buse (2) est réalisée de préférence sous forme de composant d'une seule pièce, de préférence réalisé dans un procédé de moulage par injection, contenant
- l'ouverture d'entrée de buse (14),
- une ouverture de sortie de buse (17) et
- un raccord de conduite d'alimentation en lait, en particulier sous forme de tubulure d'aspiration de lait (20) entourant un canal d'alimentation en lait (19) pour le raccordement de la conduite d'alimentation en lait (4).

3. Dispositif selon la revendication 1 ou 2, **caractérisé en ce que** la buse (2) présente un canal d'alimentation en lait (19) qui débouche approximativement dans la région de la zone la plus étroite dans la portion de canal rétrécie (16) dans un canal de buse (15) de la buse.

4. Dispositif selon l'une quelconque des revendications 1 à 3, **caractérisé en ce que** la buse présente un canal de buse (15) avec un déviation, de sorte que la direction d'écoulement dans la région de l'ouverture d'entrée de buse (14) et la direction d'écoulement dans la région d'une ouverture de sortie de buse (17) s'étendent de préférence approximativement à angle droit l'une par rapport à l'autre.

5. Dispositif selon l'une quelconque des revendications 1 à 4, **caractérisé en ce que** la buse (2) peut être raccordée par le biais d'une fermeture à baïonnette (21, 22) à la conduite d'alimentation en vapeur (3).

6. Dispositif selon l'une quelconque des revendications 1 à 5, **caractérisé en ce qu'**un récipient de lait est associé à la composante de buse mobile et **en ce que** la buse (2) est fixée de manière détachable dans une partie de couvercle (24) du récipient de lait.

7. Dispositif selon l'une quelconque des revendications 1 à 6, **caractérisé en ce que** la composante d'appareil présente des moyens de commande (10) par le biais desquels la pompe à air (6) peut être commandée pour prédéfinir le rapport de mélange du mélange vapeur-air dans la conduite d'alimentation en vapeur (3).

8. Dispositif selon l'une quelconque des revendications 1 à 7, **caractérisé en ce qu'**entre la pompe à air (6) et la conduite d'alimentation en vapeur (3) est disposé un diaphragme, de préférence ayant un diamètre compris entre 0,2 mm et 2 mm.

9. Dispositif selon l'une quelconque des revendications 1 à 8, **caractérisé en ce que** la composante d'appareil présente un récipient d'eau (8), une pompe à eau (7) raccordée à celui-ci, avec laquelle de l'eau peut être acheminée au générateur de vapeur, ainsi que des moyens de commande (12) pour faire varier la puissance de la pompe à eau.

10. Dispositif selon l'une quelconque des revendications 1 à 9, **caractérisé en ce que** la composante d'appareil présente un boîtier avec un point d'arrimage pour recevoir le récipient de lait.

11. Dispositif selon l'une quelconque des revendications 1 à 10, **caractérisé en ce que** le générateur de vapeur peut être commandé de telle sorte qu'en fonction d'étapes de procédé précédentes ou suivantes, de l'eau résiduelle et/ou de la vapeur subsistant à l'intérieur de celui-ci peut être éjectée par chauffage du générateur de vapeur.

12. Dispositif selon l'une quelconque des revendications 1 à 11, **caractérisé en ce que** la conduite d'alimentation en vapeur (3) et la buse (2) peuvent être rincées avec de l'eau de telle sorte qu'il n'y ait pas d'aspiration de lait par le biais de la conduite d'alimentation en lait (4) et qu'il n'y ait pas d'écoulement d'eau dans le récipient de lait.

13. Dispositif selon l'une quelconque des revendications 1 à 5, **caractérisé en ce que** la composante de buse mobile est supportée sur la composante d'appareil de manière rotative ou pivotante et **en ce qu'**un récipient de lait peut être raccordé indépendamment de la composante d'appareil et/ou de la composante de buse à la conduite d'alimentation en lait.

14. Dispositif selon la revendication 5 et la revendication 6, **caractérisé en ce que** la buse (2) est supportée à rotation dans la partie de couvercle (24) de telle sorte que la fermeture à baïonnette (21, 22) soit fermée dans une première position de rotation et soit ouverte dans une deuxième position de rotation.

15. Dispositif selon l'une quelconque des revendications 1 à 14, **caractérisé en ce que** le raccordement de la composante de buse (41) à la composante d'appareil (40) peut être déterminé au moyen d'un capteur, la génération de vapeur ne pouvant être activée dans la composante d'appareil que lorsque la composante de buse est raccordée.

16. Dispositif selon l'une quelconque des revendications 1 à 15, **caractérisé en ce que** l'air peut être injecté dans la conduite d'alimentation en vapeur à une pression comprise entre 0,2 et 2 bars, de préférence à environ 1 bar.

17. Dispositif selon l'une quelconque des revendications 1 à 16, **caractérisé en ce que** la buse présente dans la région de sa zone la plus étroite (16), un diamètre compris entre 0,5 mm et 2,5 mm, de préférence d'environ 1,5 mm et dans la région du canal de buse (15) s'y raccordant directement, un diamètre compris entre 0,6 mm et 2,7 mm, de préférence d'environ 1,7 mm.

18. Dispositif selon l'une quelconque des revendications 1 à 17, **caractérisé en ce que** la conduite d'alimentation en lait (19) présente, avant la buse (12) une section transversale de canal comprise entre 0,5 mm² et 2,5 mm², de préférence d'environ 1,25 mm².

19. Dispositif selon l'une quelconque des revendications 1 à 13, **caractérisé en ce que** la buse (2) présente un diamètre à l'extrémité de sortie compris entre 2 et 15 mm, de préférence d'environ 6 mm à 8 mm.

20. Dispositif selon l'une quelconque des revendications 1 à 19, **caractérisé en ce qu'**entre le générateur de vapeur (9) et la buse (2) est disposée une soupape à 3/2 voies (32), qui, dans l'état fermé, ventile vers l'aval la conduite d'alimentation en vapeur (3).

21. Dispositif selon l'une quelconque des revendications 1 à 20, **caractérisé en ce que** la conduite d'alimentation en lait (4) et l'ouverture de sortie de buse (17) de la buse (2) ou un tube de décharge (50) s'y raccordant sont disposés au niveau de la composante de buse mobile (41) de telle sorte que du lait puisse être aspiré hors d'un récipient de lait, notamment hors d'une tasse, et être à nouveau réintroduit dans le même récipient de lait sous forme de lait chaud ou de mousse de lait.

22. Dispositif selon l'une quelconque des revendications 1 à 21, **caractérisé en ce que** le générateur de vapeur (9) peut être commandé de telle sorte que pendant une opération de chauffage, une quantité définie d'eau puisse être injectée dans le générateur de vapeur, jusqu'à ce qu'il se forme dans le système, avant la prise de mousse de lait, une surpression de vapeur pouvant être limitée par une soupape de surpression ou pouvant être réduite par une soupape de vapeur commandée.

23. Dispositif selon la revendication 9 et selon l'une quelconque des revendications 10 à 22, **caractérisé en ce que** la pompe à eau (7) peut être entraînée avec une pression de travail, à laquelle une soupape de surpression (51) montée en aval peut être ventilée, afin de permettre, dans un fonctionnement de détartrage, le nettoyage et le détartrage de la soupape de surpression.

24. Dispositif selon l'une quelconque des revendications 1 à 19, **caractérisé en ce qu'**entre le générateur de vapeur (9) et la buse (2) est disposée une soupape d'arrêt à 2/2 voies (32), et **en ce que** pour empêcher un vide dans la conduite d'alimentation en vapeur (3) en aval lorsque la soupape d'arrêt à 2/2 voies est fermée, de l'air peut être injecté avec la pompe à air (6) dans la conduite d'alimentation en vapeur.

25. Utilisation d'un dispositif selon l'une quelconque des revendications 1 à 21, pour l'aspiration de lait depuis un récipient de lait non associé au dispositif, en particulier depuis une tasse et pour distribuer du lait chaud ou de la mousse de lait dans le même récipient de lait.

26. Dispositif selon l'une quelconque des revendications 1 à 10, **caractérisé en ce que** la composante d'appareil peut être arrimée à une machine à café, au moins l'alimentation en eau et en électricité étant réalisée par le biais de la machine à café.
